Europäisches Patentamt

European Patent Office

Office européen des brevets

(11) Publication number: **0 397 248**
**A2**

# EUROPEAN PATENT APPLICATION

(21) Application number: **90201117.0**

(22) Date of filing: **03.05.90**

(51) Int. Cl.⁵: **H01M 2/02, H01M 6/16, H01M 2/06, //H01M6/46**

(30) Priority: **08.05.89 US 350181**

(43) Date of publication of application:
**14.11.90 Bulletin 90/46**

(84) Designated Contracting States:
**DE FR GB**

(71) Applicant: **EASTMAN KODAK COMPANY**
**343 State Street**
**Rochester, New York 14650(US)**

(72) Inventor: **Lehky, Bruce Hillary, c/o Eastman**
**Kodak Company**
**Patent Department, 343 State Street**
**Rochester, New York 14650(US)**

(74) Representative: **Baron, Paul Alexander**
**Clifford et al**
**Kodak Limited Patent Department Headstone**
**Drive**
**Harrow Middlesex HA1 4TY(GB)**

(54) **Electrochemical cell modules.**

(57) An electrochemical cell module comprising:

a) a hermetically sealed pouch containing;

b) an electrolyte and a rigid electrode assembly of a cathode and an anode each of which has a lead that extends through the hermetic seal of the pouch;

wherein the pouch has i) an inner layer made of a themoplastic structural adhesive that is in contact with and compatible with the electrolyte; ii) a middle layer of a metal foil that is impervious to permeation of contaminants and electrolyte, and iii) an outer layer of a high heat resistant polyester.

FIG. 9

## ELECTROCHEMICAL CELL MODULES

This invention relates to modular electrochemical cells and their use in assembling batteries.

U.S. Patent 4,092,464 discloses a flexible electrochemical cell in which the anode and cathode are packaged in separate pouches and then together assembled into a single pouch. The problem is that this cell requires the manufacture of three different packages, one for each electrode and one for the anode-cathode assembly. Moreover, the package is designed to be flexible.

The present invention solves the foregoing problem by providing an electrochemical cell module comprising:

a) a single hermetically sealed pouch containing;

b) an electrolyte and a rigid electrode assembly of a cathode and an anode each of which has a lead that extends through the hermetic seal of the pouch;

wherein the pouch has i) an inner layer made of a themoplastic structural adhesive that is in contact with and compatible with the electrolyte; ii) a middle layer of a metal foil that is impervious to permeation of contaminants and electrolyte, and iii) an outer layer of a high heat resistant polyester.

Hermetically sealed means that the pouch is substantially impervious to outside contaminants and the electrolyte.

In a preferred embodiment the cells comprise a lithium anode and a $MnO_2$ cathode or a $FeS_2$ cathode.

The above modular cells loose less electrolyte over time than plastic containers of the prior art. Only a single pouch is required. Thus a number of manufacturing steps involved in the preparation of separately packaged electrochemical cells are eliminated.

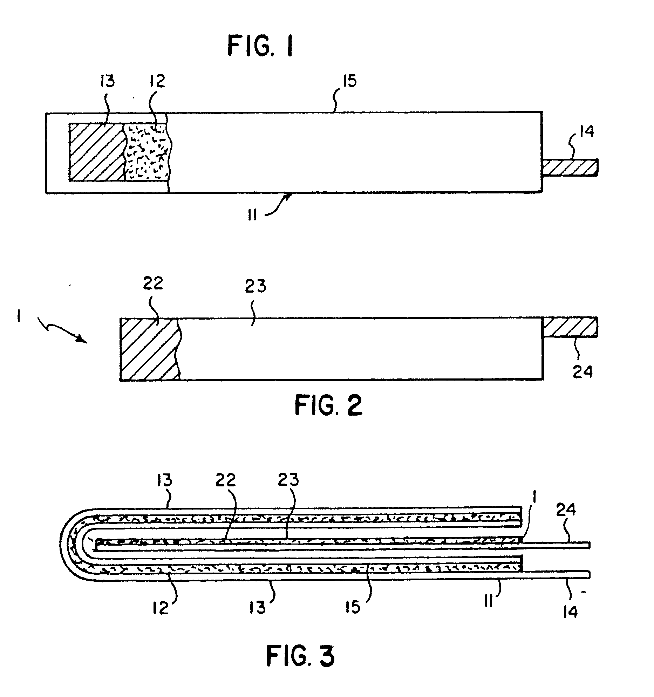

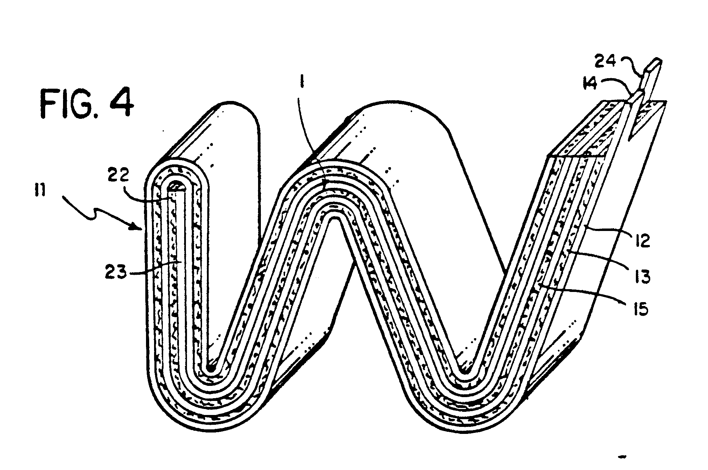

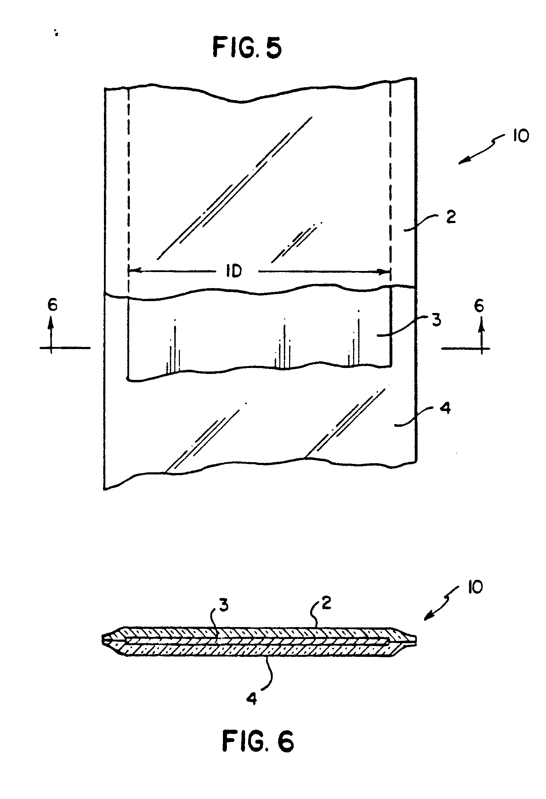

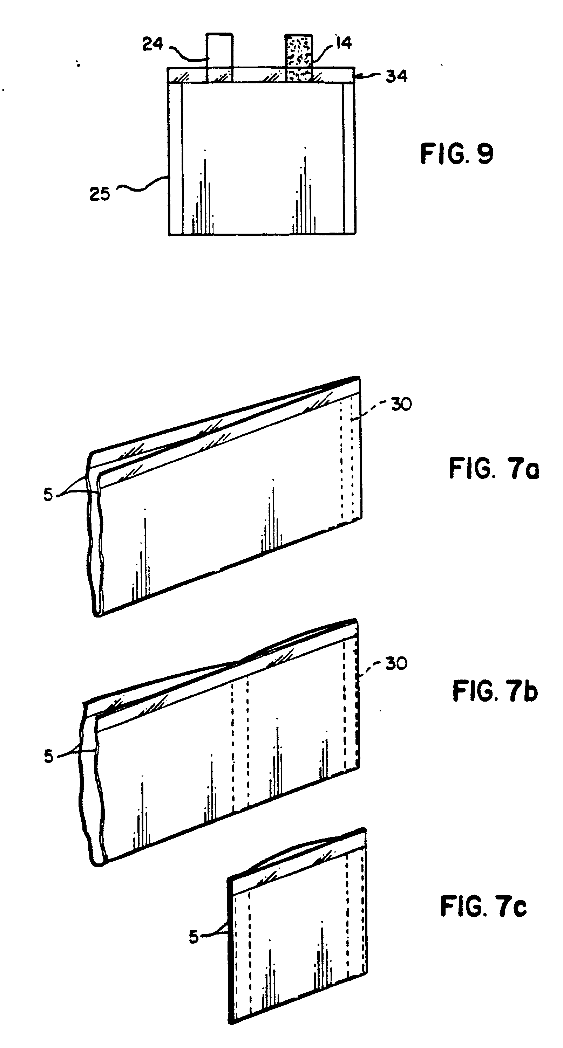

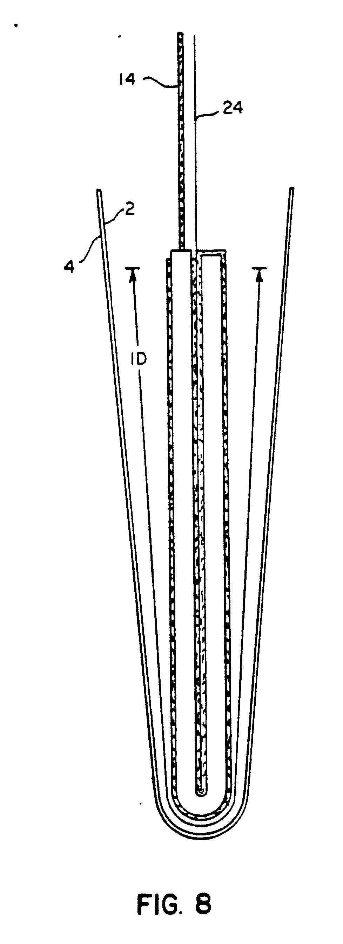

Figures 1 and 2 are schematic drawings of a cathode and anode, respectively, used in an embodiment of the disclosed invention. Figures 3 and 4 are schematic drawings of a cathode and anode combination used in an embodiment of the invention. Figure 5 is a schematic drawing of a pouch battery module. Figure 6 shows the three-layered laminate structure of the pouch. Figures 7a to 7c show one method for forming the pouch. Figure 8 shows the cathode and anode combination of Figure 3 in the pouch before sealing. Figure 9 shows the completed pouch.

The configuration of the electrode assembly inserted into the hermetically sealed pouches is not critical. For illustration purposes, the invention will be described in connection with an electrode assembly that is flat or accordion folded such as disclosed in U.S. Patent 4,761,352. In this description of the invention, lithium anodes and $MnO_2$ cathodes are used. It will be recognized that the invention will work with most electrode assemblies using solid fuel.

The anode 11 in Figure 1 is essentially a three piece laminate comprised of lithium 12 coated on a 1 mil (0.0254 mm) stainless steel foil current collector 13. A portion of the stainless steel foil 13 is left uncoated and trimmed to form the anode terminal 14. A separator 15 such as Celgard™ 4510 and/or non-woven polypropylene is rolled over the entire lithium anode 11. The separator is a porous electrically-insulating material which prevents electrical contact between the anode and the cathode but allows movement of ions.

Other useful anode-active materials include any malleable anode material such as alkali metals (Na and K), Li-Al alloys, Li-Si alloys, Li-B alloys and the metals of Groups Ia and IIa of the periodic table of elements. Malleable anode-active materials are coatable on metal foil. Also, the separator can be coated onto the surface of the active material with considerable adherence of the separator to the anode layer. Metal foils which can be used as the current collector and support include metals such as nickel, stainless steel, aluminum and titanium.

The separator could be placed over the cathode. In any case, a small excess of separator is left relative to the ends of the electrode. The total length and thickness of the anode will be dictated by the fuel loading requirements of the electrochemical cell or battery specification under consideration.

The cathode is a laminate as shown in Figure 2. It is made with $MnO_2$. The $MnO_2$ cathode 1 comprises a stainless steel grid current collector 22 coated on one or both sides with a mixture 23 of $MnO_2$, carbon and Teflon™. A small portion of the stainless steel current collector is left uncoated and shaped at one end to function as a cathode terminal 24.

The wide variety of cathode-active materials which would be useful in the electrode assemblies of this invention include the various forms of polyfluorocarbons, i.e. $(CF_x)_n$ wherein $x \overline{<} 4$ and n is some indeterminate large number, $FeS_2$, $FeS$, $CuO$ and $Bi_2O_3$.

A complete electrode assembly is shown in Figure 3. It is made by positioning the cathode 1 on top of the separator 15 attached to the anode 11 so that the cathode terminal 24 and the anode terminal 14 are side by side but are not in electrical contact. The cathode, in this embodiment of the invention, is about one-half the length of the anode. The entire anode 11 is then folded over the entire cathode 1 to form a laminate structure in which the cathode 1 is sandwiched between the folds of the anode 11. This assembly can be used in the modular cells of this invention.

Alternatively, the electrode assembly of Figure 3 can be accordion folded as shown in Figure 4. The accordion folded electrode assembly of Figure 4 is a series of connected "V" folds. The length of each leg in the fold and the number of folds and legs will, of course, be determined by the dimensions of the pouch in which the electrode assembly is to be inserted. Obviously, electrode assemblies having more than two "V" folds or four legs are possible, depending upon the fuel loading requirements of the intended power application and the specific anode and cathode materials used.

One method for folding the electrode assembly of this invention, referring to Figure 3, is to make sequential folds beginning at the end away from the contacts 14 and 24. As each fold is made, the loose ends of the separate components are thus free to shift enough to reduce stresses and strains at the fold thereby preventing pinching, cracking, breaking, delamination, shorting, or the like.

After checking for internal electrical shorts with an ohmmeter, the electrode assembly is made into an electrochemical cell or battery by first inserting the assembly into a pouch 25 as shown in Figure 9. An electrolyte comprising, for example, a solvent mixture of a propylene carbonate and dimethoxyethane or butyrolactone and dimethoxyethane with a lithium salt such as lithium perchlorate or lithium tetrafluoroborate is added to the pouch 25.

The electrode assembly is inserted in the pouch so that electrode terminals 14 and 24 (Figure 9) protrude upward forming a complete electrochemical cell or battery. The pouch can be heat sealed as described hereafter.

The modular electrochemical cell of this invention is rigid. In view of the construction of the electrode assembly, flexing could cause electrical shorts and/or inefficient use of the cathode and anode materials.

The material 10 from which the pouch is formed comprises three layers in a laminate structure, as shown in Figure 5, and in cross section in Figure 6 along lines 6-6 of Figure 5. Layer 2 which, when the pouch is formed, is in contact with the electrolyte is a thermoplastic structural adhesive. As such it is capable of bearing a load and has high peel resistance necessary for proper bonding to itself and to the metal cell leads. The thermo- plastic adhesive used in layer 2 is also selected so that it is compatible with a selected electrolyte. Different electrolyte combinations will require a selection of different materials for layer 2. Incompatibility could result in the layer becoming jelly like or otherwise adversely affecting the internal resistance of the cell or cause leakage and loss of hermeticity.

The inner layer is selected, in part, by establishing compatibility with electrolyte by immersing pieces of the material in vials of the selected electrolyte at room temperature and at elevated temperatures and periodically examining these samples for delamination or other attack by the strong solvents used.

The materials that can be considered for use as an inner layer include Polybond®, Nucrel® and Scotchweld 4060®. In the embodiment of the invention presented herein the electrolyte is gama-butyrolactone and dimethoxy ethane in 1 Molar $CF_3SO_3Li$ or a 1:1 volume mixture of propylene carbonate, 1,3-dioxolane comprising 0.8 molar electro salt ($LiAsF_6$). The thermoplastic structural adhesive material used in the embodiment for the purposes of illustrating an embodiment of the invention is Scotchweld 4060®. Any acrylic acid modified polyethylene or acrylic acid modified polypropylene can be considered for use. These materials exhibit high peel resistance when sealed to themselves or to metals.

Layer 3 is a metal foil about 0.013 mm to 0.06 mm thick. Aluminum, copper or stainless steel are all suitable materials for this layer. The function of the metal foil is to provide a permeation barrier to air oxygen, water and any other contaminants which might enter the cell from outside and to the cell electrolytes so that they will not permeate from the cell thereby diminishing cell performance. The metal foil shown in the embodiment of Figure 5 is aluminum.

The outer layer 4 is a thermoplastic polyester such as polyethylene terephthalate or polybutylene terephthalate. It is a property of these materials to exhibit a high heat distortion temperature in the range of 310°F (154°C) to 430°F (211°C) at 66 psi (455 kPa) load. This is needed for proper heat sealing. These materials also have excellent puncture resistance thereby affording the encapsulated cell high strength and resistance to accidental tearing. The material used in Figure 5 is Scotchpak 33®.

The thermoplastic polyester has a thin coating or acrylic acid modified polyolefin on the heat seal side which, as mentioned above, bonds with high strength to metals and to itself when heated. This heat seal side is positioned in contact with the metal foil, layer 3.

The three layers are laminated together using heated pressure rollers or two of the materials can be extrusion coated onto the polyester layer or onto the metal foil layer to form a fully bonded three part lamination.

In Figure 6, it can be seen that the foil layer does not extend the entire width of the pouch material.

That portion of the pouch which is free of foil (layer 3) will be the section through which the anode and cathode leads extend. This absence of foil prevents short circuiting of the cell leads on the metal foil during heat sealing. This relationship of the foil layer is shown also in Figure 5, in that the metal foil layer 2 has the dimensions indicated by "ID".

The heat sealing is done so as to raise the surface temperature of the anode and cathode leads, 14 and 24 of Figure 8, to 350°F (177°C) minimum. At this temperature high strength bonding of the thermoplastic structural adhesive, layer 2 in Figure 6, is achieved. The seals formed in this way remain intact when subjected to vacuum forces of 25 inches (635 mm) of Hg at ambient temperature and after exposure to 70°C for 24 hours.

Referring to Figure 7, in preparing a pouch according to the invention, the pouch material of Figure 5 is folded so that both edges 5 and 5' meet, and one edge is heat sealed resulting in edge 30, Figure 7. The result is an elongated 3-layer material folded in a manner so that the inner structural thermoplastic adhesive layer 2 of Figure 5 is on the inside.

A second heat seal is made at 32 over a form (Figure 7B) to complete the pouch, the top edge of which is open as shown. This pouch is cut away from the remaining unsealed trilayer pouch material resulting in a single pouch as shown in Figure 7C.

By heat sealing over a form of suitable dimensions the pouch has a volumetric capacity equal to the cell and electrolyte to be added. The pouch is formed along the longitudinal surface in a manner that the pouches will have the dimensions horizontally, vertically and volume-wise to match the electrode assembly to be inserted therein.

The electrode assembly is inserted into the pouch 5 of Figure 7c with the leads 24 and 14 thereof extending above the pouch. The result is shown in cross section in Figure 8. In the pouch the electrolyte is added and the pouch 25 is heat sealed across the open end resulting in a sealed modular electrochemical cell as shown in Figure 9. The metal foil 2 does not extend into the area 34 of the hermetic seal around the cell leads.

Pouch cells were prepared as described above and tested for hermeticity by aging the cells at a constant temperature of 70°C for a period of 100 days. Ten days at 70°C is considered to be the equivalent of one year at ambient temperature for purposes of permeation rate determination. The cells were weighed prior to this test and at ten day intervals during the test. After 100 days it was found that the cells lost an average of .054 g of electrolyte from an average initial fill weight of 1.56 g.

The percent loss in ten years at ambient temperature (25°C) was then calculated as follows:

$$\frac{.054 \text{ g}}{1.56 \text{ g}} \frac{\text{(Average Loss Electrolyte)}}{\text{(Average Weight)} \text{ (Electrolyte)}} \times 100\% = 3.46\% \text{ Loss of Electrolyte in Ten Years at Room Temperature}$$

This data clearly shows that the cells will loose an insignificant amount of electrolyte in ten years at room temperature and the degree of hermeticity of these cells is more than adequate for a claim of ten year shelf life.

Cells can be manufactured as described above in a variety of shapes including square, rectangular and round disc. Dimensions of the various shapes are then standardized to provide modules of cells which are then arranged and electrically interconnected to create batteries which meet specific needs of voltage current drain, capacity of discharge and hours of life. An almost limitless number of combinations can be produced to meet specific requirements. Examples include series, parallel and series-parallel. Whatever combination is employed, the cells are enclosed in a rigid housing of plastic or metal to withstand abuse in the field of use.

## Claims

1. An electrochemical cell module comprising:
   a) a single hermetically sealed pouch containing;
   b) an electrolyte and a rigid electrode assembly of a cathode and an anode each of which has a lead

4

that extends through the hermetic seal of the pouch;

wherein the pouch has i) an inner layer made of a themoplastic structural adhesive that is in contact with and compatible with the electrolyte; ii) a middle layer of a metal foil that is impervious to permeation of contaminants and electrolyte, and iii) an outer layer of a high heat resistant polyester.

2. The cell module of claim 1 wherein the dimensions of the middle metal foil layer are such that it does not contact the anode and cathode leads.

3. The cell module of claim 1 or 2 wherein the electrode assembly is in the form of a "V" in the pouch and the anode is twice the length of the cathode.

4. The cell module of claim 3 wherein the electrode assembly comprises a flat cathode sandwiched between the "V" fold of the anode.

5. The cell module of claim 1 or 2 wherein the electrode assembly is accordion folded and the anode is twice the length of the cathode.

6. The cell module of any of claims 1 to 5 wherein the electrolyte is 1:1 propylene carbonate and 1,3-dioxolane and 0.8 Molar $LiAsF_6$ or gamma-butyrolactone and dimethoxy ethane in 1 Molar $CF_3SO_3Li$.

7. A cell according to any one of claims 1-6 comprising a lithium anode and an $MnO_2$ cathode.

8. A cell according to any one of claims 1-6 comprising a lithium anode and an $FeS_2$ cathode.

9. A cell according to any of claims 1 to 8 wherein the pouch is a three-layer laminate of an acrylic acid, polyethylene or polypropylene, aluminum foil and a high heat resistant polyester.

10. A battery comprising two or more electrochemical cell modules according to any one of claims 1-9 connected in series, in parallel or in series-parallel.

## FIG. 1

## FIG. 2

## FIG. 3

# FIG. 4

# FIG. 5

# FIG. 6

FIG. 9

FIG. 7a

FIG. 7b

FIG. 7c

FIG. 8